(19) Europäisches Patentamt
European Patent Office
Office européen des brevets

(11) Veröffentlichungsnummer: **0 277 600**
**B1**

(12) # EUROPÄISCHE PATENTSCHRIFT

(45) Veröffentlichungstag der Patentschrift: **21.03.90**

(51) Int. Cl.⁴: **C09B 62/085**

(21) Anmeldenummer: **88101276.9**

(22) Anmeldetag: **13.01.86**

(60) Veröffentlichungsnummer der früheren Anmeldung nach Art. 76 EPÜ: **0189081**

(54) **Verfahren zur Herstellung von Azo-Reaktivfarbstoffen.**

(30) Priorität: **23.01.85 DE 3502104**

(43) Veröffentlichungstag der Anmeldung: **10.08.88 Patentblatt 88/32**

(45) Bekanntmachung des Hinweises auf die Patenterteilung: **21.03.90 Patentblatt 90/12**

(84) Benannte Vertragsstaaten: **CH DE GB LI**

(56) Entgegenhaltungen:
**EP-A- 0 131 542**
**JP-A-60 011 559**

(73) Patentinhaber: **BAYER AG, D-5090 Leverkusen 1 Bayerwerk(DE)**

(72) Erfinder: **Jäger, Horst, Dr., Carl-Rumpff-Strasse 37, D-5090 Leverkusen 1(DE)**

**EP 0 277 600 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von Farbstoffen der Formeln

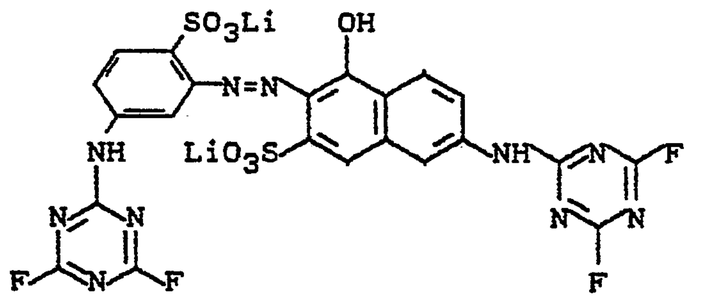

(Ia)

bzw.

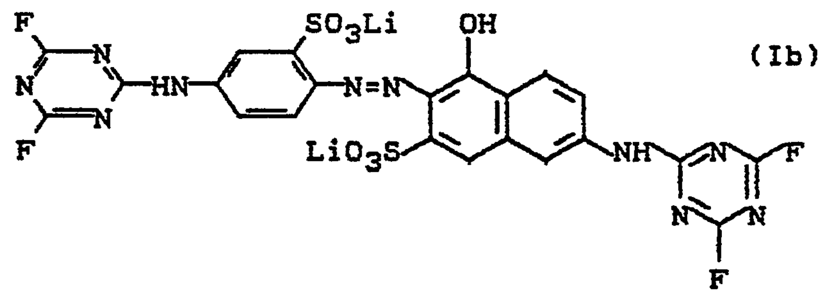

(Ib)

bzw.

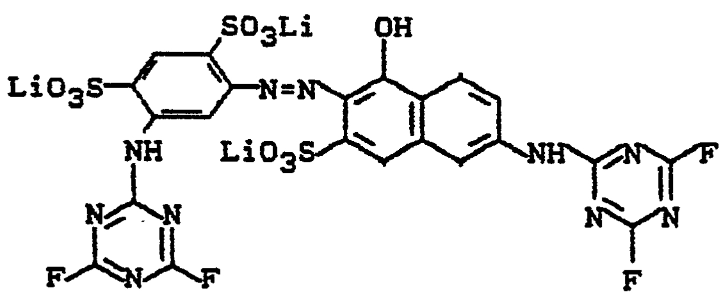

(Ic)

bzw.

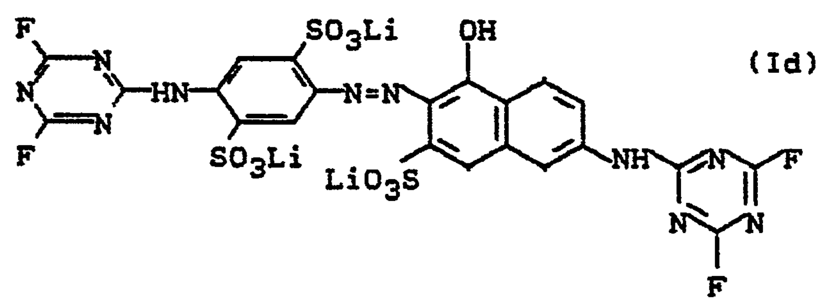

(Id)

Das neue Verfahren ist dadurch gekennzeichnet, daß man einen Farbstoff der Formeln

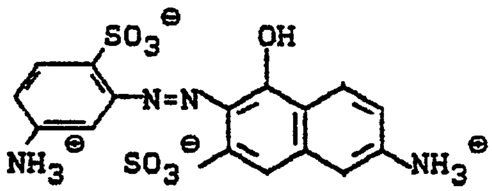

(IIa)

bzw.

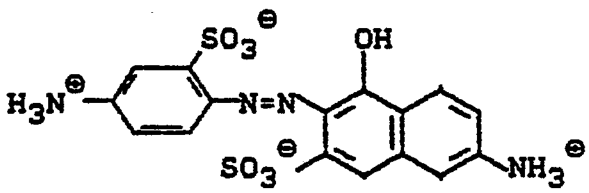

(IIb)

bzw.

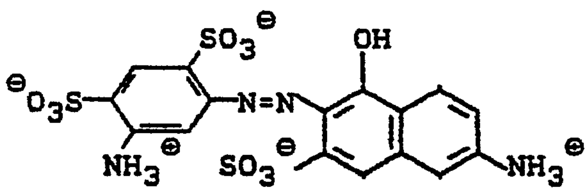

(IIc)

bzw.

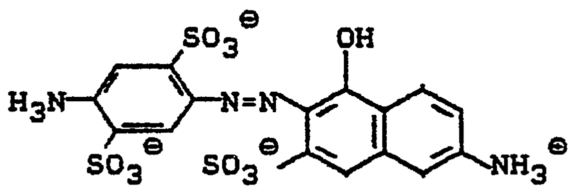

(IId)

in das Li-salz überfürt und dieses in Gegenwart von LiOH als säurebindendes Mittel mit 2,4,6-Trifluortriazin umgesetzt.

Gegenstand der Erfindung ist weiterhin ein Verfahren zur Herstellung von Farbstoffen der Formel

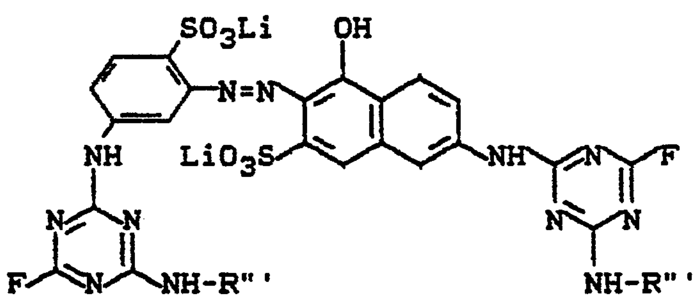

bzw.

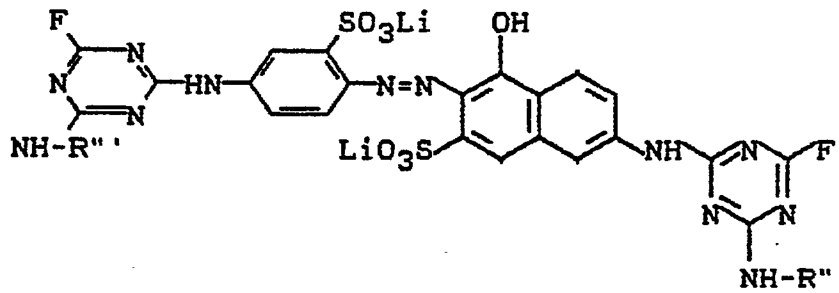

worin

R''' = H, m-Sulfanilsäure, p-Sulfanilsäure, 1-Amino-4-methoxy-benzol-3-sulfonsäure-, 1-Amino-4-ethoxy-benzol-,3-sulfonsäure-, 1-Amino-4-methyl-benzol-3-sulfonsäure-, 2-Amino-naphthalin-4,8-disulfonsäure-, N-Ethylaniiln-, N-Methylanilin, N-β-Oxyethylanilin-, N-Ethylanilin-x-sulfonsäure-, Ethanolamin-, Diethanolamin-, Ethylamin-, Isopropylamin-, Taurin-, N-Methyl-taurin-, Aminosulfat-, Aminoessigsäure-, β-Methoxyethylain-Rest, dadurch gekennzeichnet, daß man einen Farbstoff der Formel

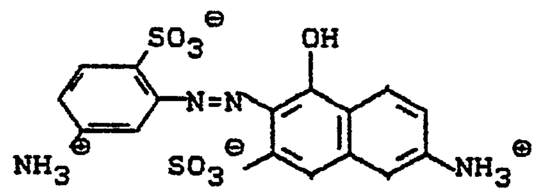

bzw.

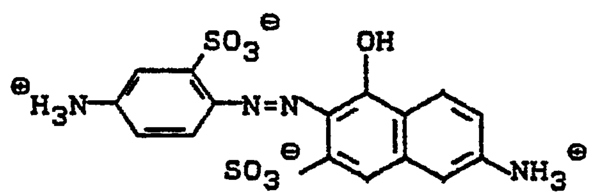

in das Li-salz überführt, dann zunächst mit 2,4,6-Trifluortriazin in Gegenwart von LiOH als säurebindendes Mittel vollständig acyliert und anschließend mit einem aliphatischen oder aromatischen Amin in Gegenwart von LiOH als säurebindendes Mittel oder mit Ammoniak umsetzt.

Die nach den neuen Verfahren erhältlichen Reaktivfarbstoffe zeichnen sich durch hohe Reaktivität aus. Besonders hervorzuheben ist, daß die Farbstoffe eine gute Löslichkeit und Elektrolytlöslichkeit bei guten Auszieheigenschaften und hoher Farbstoff-Fixierung aufweisen.

Die Reaktivfarbstoffe der Formel (1) eignen sich zum Färben und Bedrucken der verschiedensten hydroxygruppen- oder amidgruppenhaltigen Substrate, wie Seide, Leder, Wolle, Superpolyamidfasern und Superpolyamidurethanen, insbesondere aber cellulosehaltiger Materialien faseriger Struktur, wie Leinen, Zellstoff, regeneriertes Cellulose und vor allem Baumwolle. Sie eigenen sich sowohl für das Ausziehverfahren als auch zum Färben nach dem Foulardfärbeverfahren, wonach die Ware nit wäßrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

Beispiel

a) Kondensation mit 2,4,6-Trifluortriazin

43,8 g des Farbstoffs der Formel

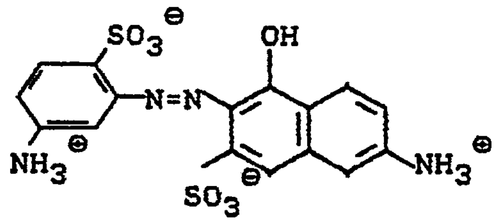

(er liegt als zweifaches Betain vor; die Herstellung geschieht durch Diazotieren von 1-Amino-3-acetyl-amino-benzol-6-sulfonsäure und Kupplung auf 1-Hydroxy-6-acetylamino-naphthalin-3-sulfonsäure bei pH 5-6, Verseifung der Acetylgruppen durch Kochen mit verdünnter Natronlauge und Isolierung im sauren Medium), werden in 1 Liter Wasser verrührt und mit 10-%iger Lithiumhydroxidlösung auf pH 7 eingestellt, wobei Lösung eintritt. Man wirft 500 g Eis ein und tropft dann 30 g 2,4,6-Trifluortriazin in 15 Minuten ein, wobei man durch fortlaufende Zugabe von 10 % Lithiumhydroxidlösung den pH zwischen 6 und 7 hält. Man rührt 10 Minuten nach und prüft auf vollständige Acylierung beider Aminogruppen.

b) Kondensation mit einem aromatischen Amin

Zu dem nach a) erhaltenen Reaktionsgemisch läßt man eine neutrale Lösung von 34,6 g m-Sulfanilsäure einlaufen und hält dabei durch fortlaufende Zugabe von 10-%iger Lithiumhydroxidlösung einen pH-Wert von 6 bis 7 ein. Man rührt unter Einhaltung des angegebenen pH-Bereiches 60 Minuten nach, wobei man die Temperatur auf 10-15°C ansteigen läßt. Nachdem man sich durch eine DC von der vollständigen zweifachen Acylierung überzeugt hat, salzt man den Farbstoff aus. Nach dem Absaugen, Trocknen und Mahlen erhält man ein orangerotes Pulver, daß Baumwolle nach einem der für Reaktivfarbstoffe üblichen Applikationsverfahren in klaren gelbstichigen Orangetönen färbt (Farbkennzahl 4).

Der Farbstoff entspricht der Formel

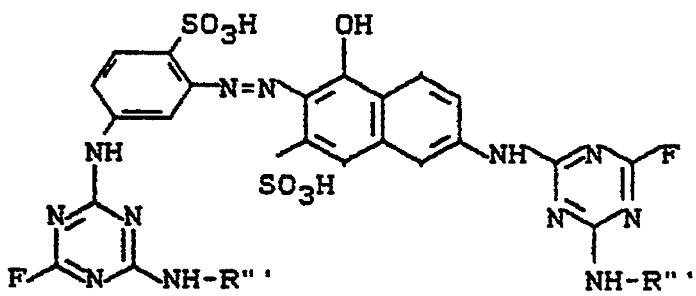

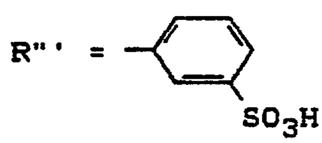

Farbstoffe mit ähnlichen Eigenschaften werden erhalten, wenn man anstelle der m-Sulfanilsäure eine äquimolare Menge der nachfolgend aufgeführen Amine verwendet.

p-Sulfanilsäure
1-Amino-4-methoxy-benzol-3-sulfonsäure
1-Amino-4-ethoxy-benzol-3-sulfonsäure
1-Amino-4-methyl-benzol-3-sulfonsäure
2-Amino-naphthalin-4,8-disulfonsäure
N-Ethylanilin
N-Methylanilin
N-β-Oxyethylanilin
N-Ethylanilin-x-sulfonsäure

c) Umsetzung mit Ammoniak

Das nach a) erhaltene Reaktionsgemisch wird bei 0°C mit 25-%iger Ammoniaklösung auf pH 9,5 gestellt und 3 Stunden bei der angegebenen Temperatur und pH gerührt. Man stellt dann mit Salzsäure auf pH 7,5 und arbeitet wie in Absatz b) angegeben, auf. Man erhält ein orangerotes Pulver, das Baumwolle

in klaren gelbstichigen Orangetönen färbt (Farbkennzahl 4). Der Farbstoff entspricht der obigen Formel mit R‴ = H.

d) Umsetzung mit einem aliphatischen Amin

Das nach a) erhaltene Reaktionsgemisch wird tropfenweise bie 0°C mit 12,2 g Ethanolamin auf pH 9,5 gestellt und anschließend 2 Stunden bei 0-3°C gerührt, wobei der pH durch fortlaufende Zugabe von 10 % Lithiumhydroxidlösung auf dem angegebenen Wert gehalten wird. Nachdem man sich durch ein DC von der vollständigen zweifachen Acylierung überzeugt hat, stellt man den pH mit Salzsäure auf 7,5 und arbeitet den Farbstoff wie oben angegeben auf. Man erhält ein orangerotes Pulver, daß Baumwolle in klaren gelbstichigen Orangetönen (Farbkennzahl 4) färbt. Der Farbstoff entspricht der obigen Formel mit R‴ = $CH_2CH_2OH$.

Farbstoffe mit vergleichbaren Eigenschaften und ähnlichem Farbton werden erhalten, wenn man nach den Angaben von Absatz d) verfährt und anstelle von Ethanolamin eine äquimolare Menge der folgenden Amine verwendet. Diethanolamin, Ethylamin, Isopropylamin, Taurin, N-Methyl-taurin, Aminolsulfat, Aminoessigsäure, β-Methoxyethylamin.

Weitere wertvolle Farbstoffe erhält man nach Angaben von Absatz b), bzw. c), bzw. d), wenn man die nachfolgend aufgeführten Diaminoazofarbstoffe und die bei Absatz b), c) und d) erwähnten Amine verwendet.

| | Farbton | Farbkennzahl |
|---|---|---|
| 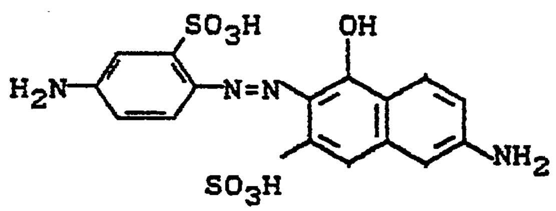 | gelbst. rot | 7 |

| | Farbton | Farbkennzahl |
|---|---|---|
| 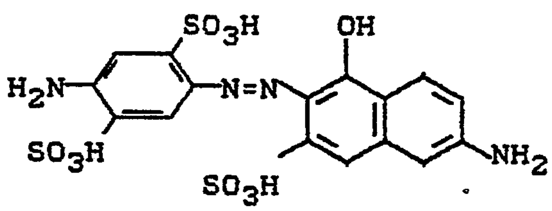 | gelbst. rot | 7 |
| 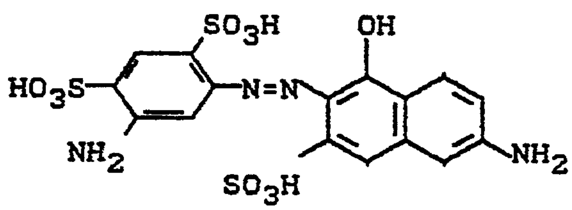 | gelbst. orange | 4 |

In der EP-A 0 131 542 wird die Herstellung von bis-reaktiven Farbstoffen mit zwei Amino-fluortriazinylresten durch Umsetzung der ebtsprechenden Diaminoazofarbstoffen in Form ihrer Na-salze mit einem Aminodifluortraizin in Gegenwart von NaOH beschrieben.

**Patentansprüche**

1. Verfahren zur Herstellung von Farbstoffen der Formeln

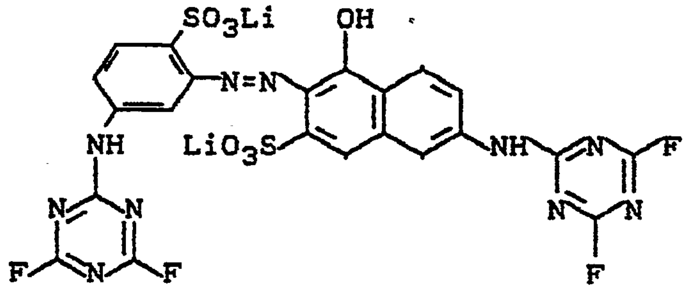

bzw.

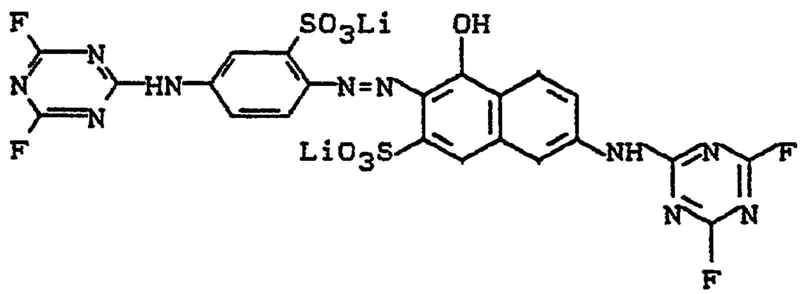

**bzw.**

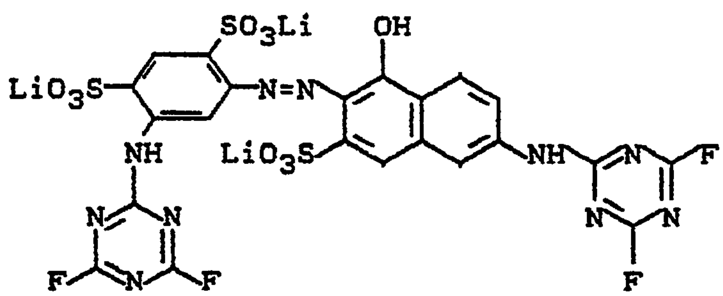

**bzw.**

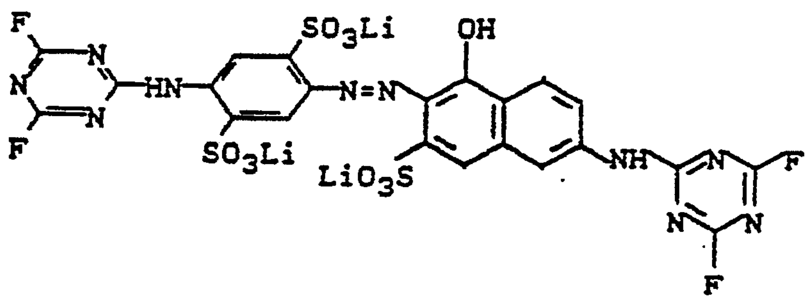

**dadurch gekennzeichnet, daß man** Verbindungen der Formel

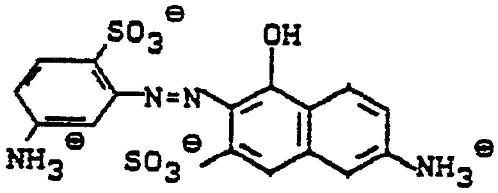

(IIa)

bzw.

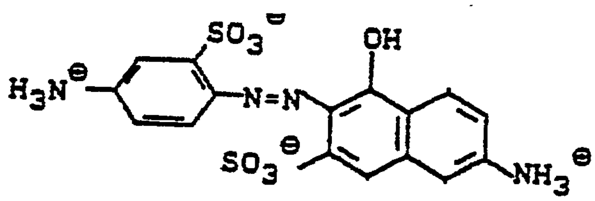

(IIb)

bzw.

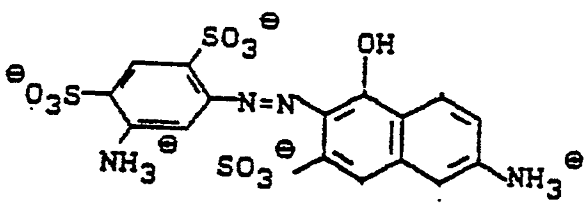

(IIc)

bzw.

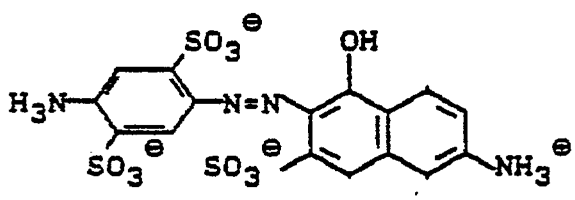

(IId)

in das Li-salz überführt und dieses in Gegenwart von LiOH als säurebindendes Mittel mit 2,4,6-Trifluortriazin umsetzt.

2. Verfahren zur Herstellung von Farbstoffen der Formel

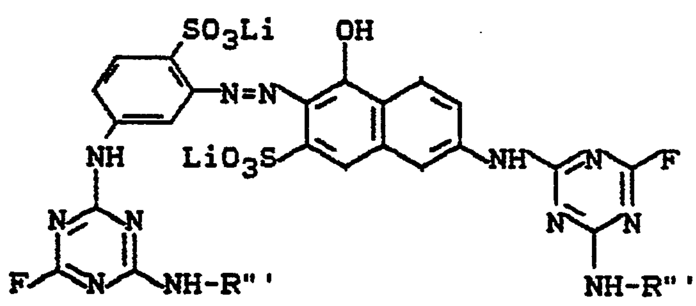

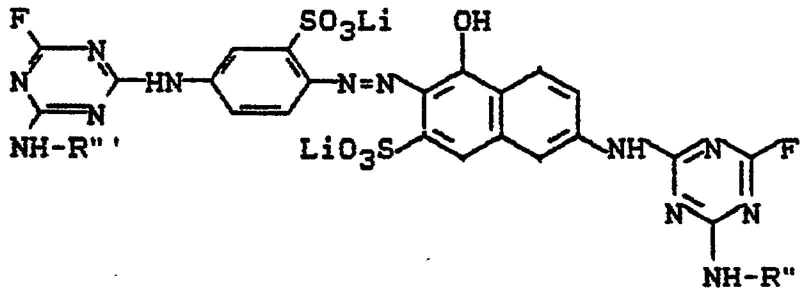

worin
R''' = H, m-Sulfanilsäure, p-Sulfanilsäure, 1-Amino-4-methoxy-benzol-3-sulfonsäure-, 1-Amino-4-ethoxy-benzol-, 3-sulfonsäure-, 1-Amino-4-methyl-benzol-3-sulfonsäure-, 2-Amino-naphthalin-4,8-disulfonsäure-, N-Ethylaniiln-, N-Methylanilin, N-β-Oxyethylanilin-, N-Ethylanilin-x-sulfonsäure-, Ethanolamino-, Diethanolamin-, Ethylamin-, Isopropylamin-, Taurin-, N-Methyl-taurin-, Aminosulfat-, Aminoessigsäure-, β-Methoxyethylamin-Rest, dadurch gekennzeichnet, daß man einen Farbstoff der Formel

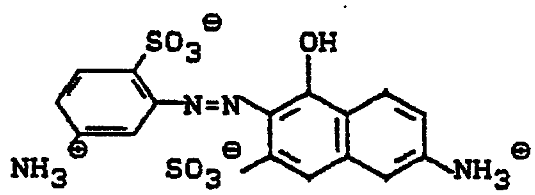

bzw.

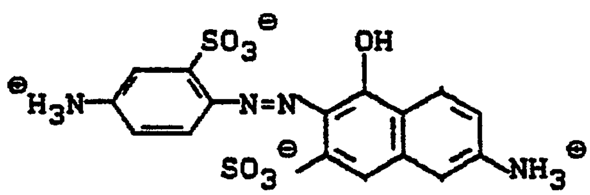

in das Li-salz überführt, dann zunächst mit 2,4,6-Trifluortriazin in Gegenwart von LiOH als säurebindendes Mittel vollständig acyliert und anschließend mit Ammoniak, m-Sulfanilsäure, p-Sulfanilsäure, 1-Amino-4-methoxy-benzol-3-sulfonsäure, 1-Amino-4-ethoxy-benzol-3-sulfonsäure, 1-Amino-4-methyl-benzol-3-sulfonsäure, 2-Amino-naphthalin-4,8-disulfonsäure, N-Ethylanilin, N-Methylanilin, N-β-Oxyethylaniiln, N-Ethylanilin-x-sulfonsäure, Ethanolamin, Diethanolamin, Ethylamin, Isopropylamin, Taurin, N-Methyl-taurin, Aminosulfat, Aminoessigsäufe, β-Methoxyethylamin in Gegenwart von LiOH als säurebindendes Mittel umsetzt.

**Claims**

1. Process for the preparation of dyestuffs of the formulae

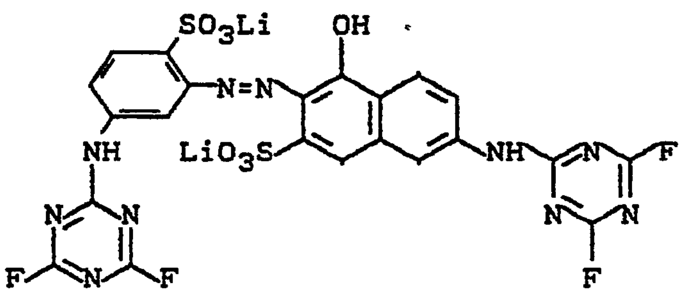

or

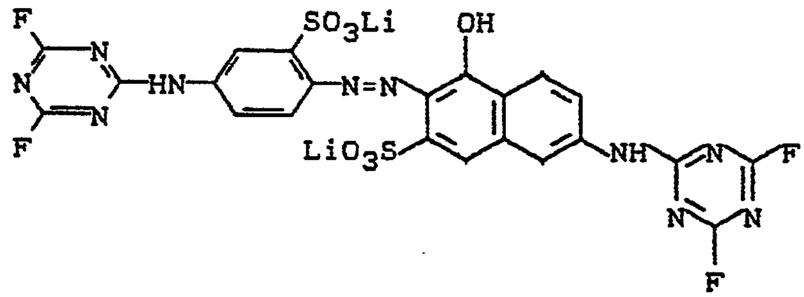

or

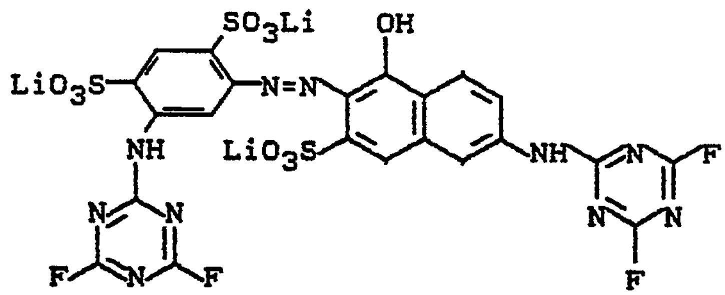

or

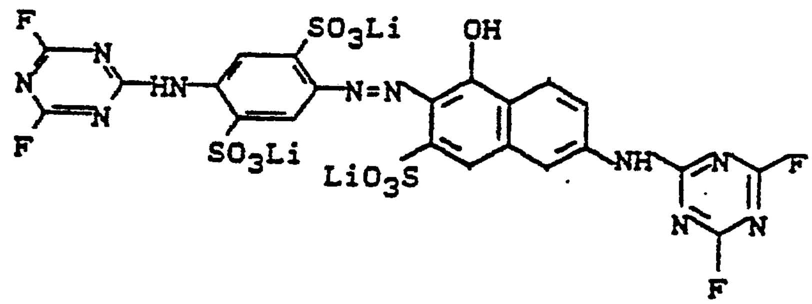

characterized in that compounds of the formula

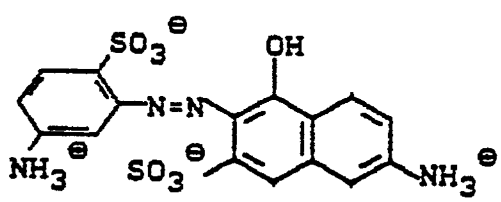

(IIa)

or

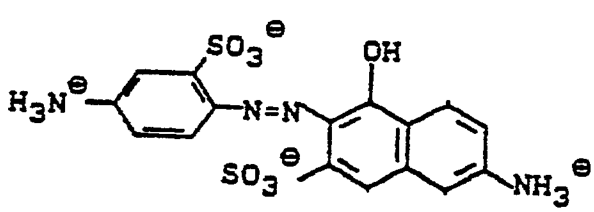

(IIb)

or

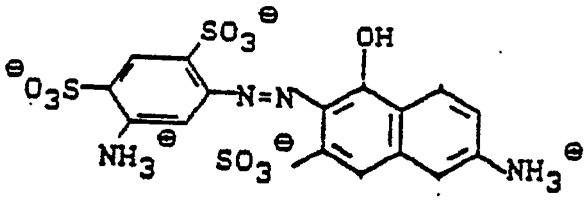

(IIc)

or

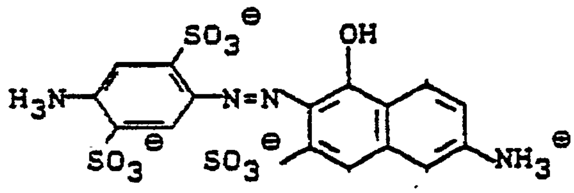

(IId)

are converted to the Li salt and this salt is reacted in the presence of LiOH as acid-binding agent with 2,4,6-trifluorotriazine.

2. Process for the preparation fo dyestuffs of the formula

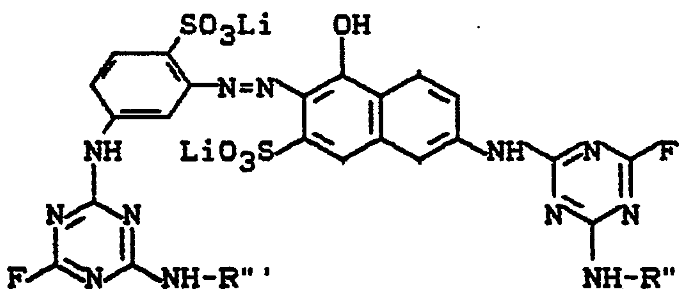

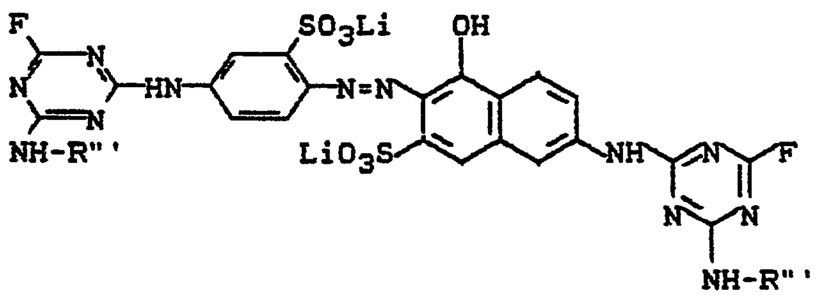

in which R‴ is H, an m-sulphanilic acid, p-sulphanilic acid, 1-amino-4-methoxybenzene-3-sulphonic acid, 1-amino-4-ethoxybenzene, 3-sulphonic acid, 1-amino-4-methylbenzene-3-sulphonic acid, 2-aminonaphthalene-4,8-disulphonic acid, N-ethylaniline, N-methylaniline, N-β-hydroxyethylaniline, N-ethylaniline-x-sulphonic acid, ethanolamine, diethanolamine, ethylamine, isopropylamine, taurine, N-methyltaurine, sulphamate, aminoacetic acid, β-methoxy-ethylamine radical, characterized in that a dyestuff of the formula

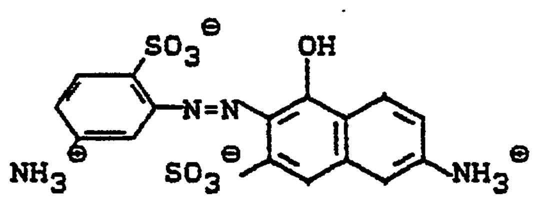

or

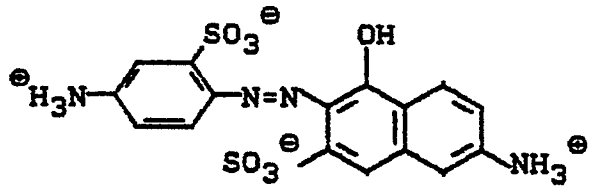

is converted into the Li salt, then first completely acylated with 2,4,6-trifluorotriazine in the presence of LiOH as acid-binding agent and then reacted with ammonia, m-sulphanilic acid, p-sulphanilic acid, 1-amino-4-methoxybenzene-3-sulphonic acid, 1-amino-4-ethoxybenzene-3-sulphonic acid, 1-amino-4-methylbenzene-3-sulphonic acid, 2-aminonaphthalene-4,8-disulphonic acid, N-ethylaniline, M-methylaniline, N-β-hydroxyethylaniline, N-ethylaniline-x-sulphonic acid, ethanolamine, diethanolamine, ethylamine, isopropylamine, taurine, N-methyl-taurine, sulphamate, aminoacetic acid, β-methoxyethylamine in the presence of LiOH as acid-binding agent.

**Revendications**

1. Procédé de préparation de colorants de formule

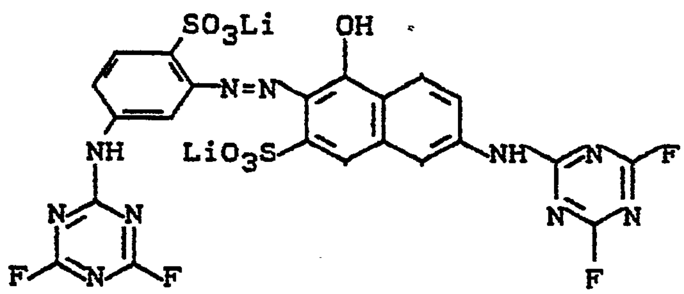

ou

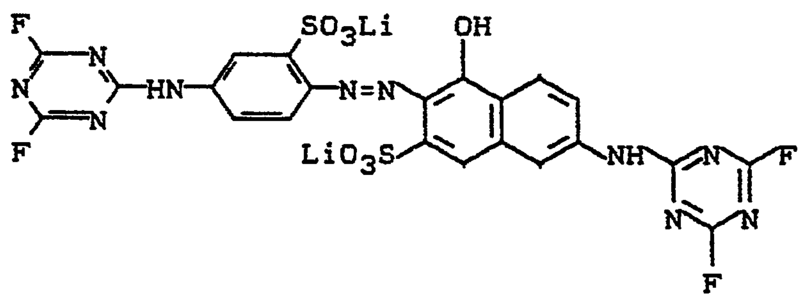

ou

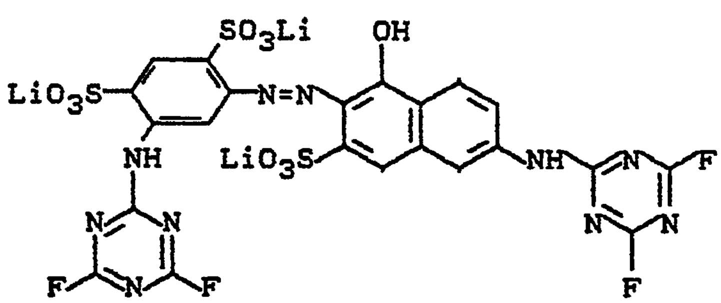

ou

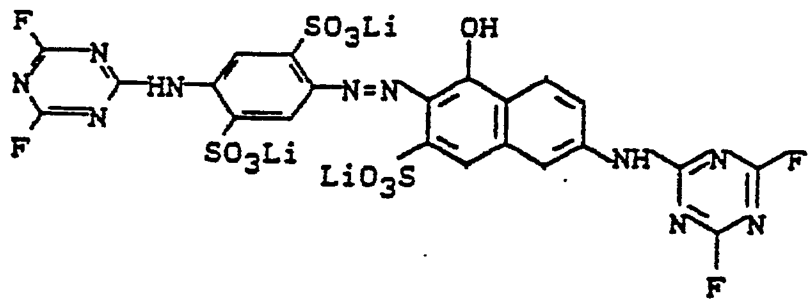

ou

caractérisé en ce que l'on transforme des composés de formule

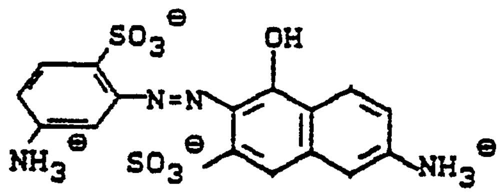

(IIa)

ou

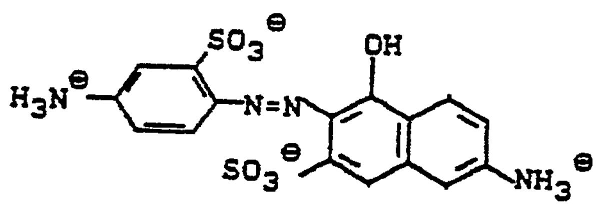

(IIb)

ou

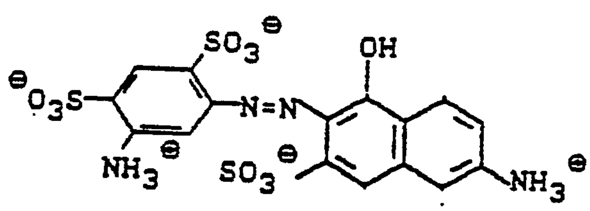

(IIc)

ou

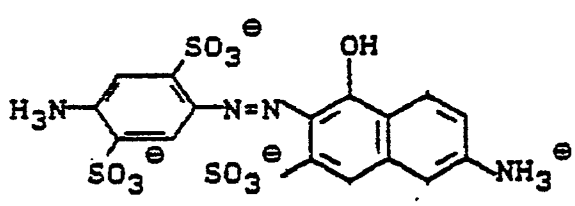

(IId)

en le sel de Li et en ce que l'on fait réagir celui-ci avec la 2,4,6-trifluorotriazine en présence de LiOH en tant qu'agent de fixation d'acide.

2. Procédé de préparation de colorants de formule

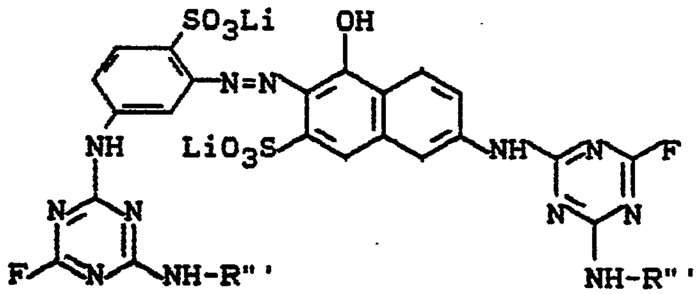

ou

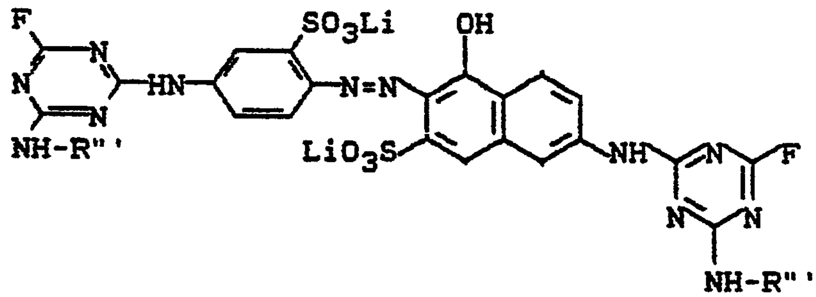

dans lesquelles R'''=H, un reste d'acide m-sulfanilique, d'acide p-sulfanilique, d'acide 1-amino-4-méthoxy-benzo-3-sulfonique, d'acide 1-amino-4-éthoxy-benzo-3-sulfonique, d'acide 1-amino-4-méthyl-benzo-3-sulfonique, d'acide 2-amino-naphtalène-4,8-disulfonique, de N-éthylaniline, de N-méthylaniline, de N-β-oxyéthylaniline, d'acide N-éthylaniline-x-sulfonique, d'éthanolamine, de diéthanolamine, d'éthylamine, d'isopropylamine, de taurine, de N-méthyltaurine, d'aminosulfate, d'acide aminoacétique, de β-méthoxyéthylamine, caractérisé en ce que l'on transforme un colorant de formule

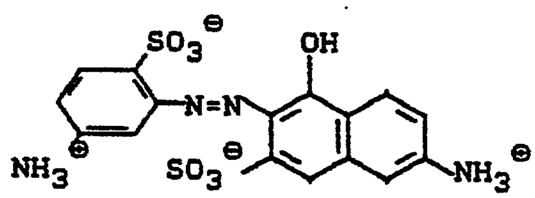

ou

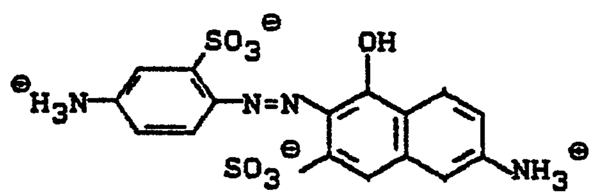

en le sel de Li, puis en ce qu'on l'acyle, d'abord totalement avec la 2,4,6-trifluorotriazine en présence de LiOH en tant qu'agent de fixation d'acide et qu'on le fait réagir ensuite avec l'ammoniaque, l'acide m-sulfanilique, l'acide 1-amino-4-méthoxy-benzo-3-sulfonique, l'acide 1-amino-4-éthoxy-benzo-3-sulfonique, l'acide 1-amino-4-méthyl-benzo-3-sulfonique, l'acide 2-amino-naphtalène-4,8-disulfonique, la N-éthylaniline, la N-méthylaniline, la N-β-oxyéthylaniline, l'acide N-éthylalinine-x-sulfonique, l'éthanolamine, la diéthanolamine, l'éthylamine, l'isopropylamine, la taurine, la N-méthyltaurine, l'aminosulfate, l'acide aminoacétique, la β-méthoxyéthylamine en présence de LiOH en tant qu'agent de fixation d'acide.